Europäisches Patentamt

European Patent Office

Office européen des brevets

(19)

(11) Veröffentlichungsnummer: **0 264 004 B1**

# EUROPÄISCHE PATENTSCHRIFT

(12)

(45) Veröffentlichungstag der Patentschrift :
02.01.91 Patentblatt 91/01

(51) Int. Cl.⁵ : **B29C 51/26**

(21) Anmeldenummer : 87113869.9

(22) Anmeldetag : 23.09.87

(54) **Vorrichtung zum Herstellen von mit hinterschäumten Bezügen versehenen Polstern, insbesondere Automobilsitzpolstern.**

(30) Priorität : 04.10.86 DE 3633921

(43) Veröffentlichungstag der Anmeldung :
20.04.88 Patentblatt 88/16

(45) Bekanntmachung des Hinweises auf die
Patenterteilung :
02.01.91 Patentblatt 91/01

(84) Benannte Vertragsstaaten :
BE DE ES FR GB IT NL SE

(56) Entgegenhaltungen :
DE-A- 2 746 686
DE-A- 3 319 391
FR-A- 1 443 503
FR-A- 2 325 483
US-A- 3 123 863
US-A- 3 686 051
PATENT ABSTRACTS OF JAPAN, Band 8, Nr.
238 (M-335)[1675], 31. Oktober 1984; & JP-A-59
118 424 (IKEDA BUTSUSAN K.K.) 09-07-1984

(73) Patentinhaber : BAYER AG
D-5090 Leverkusen 1 Bayerwerk (DE)
Patentinhaber : Fritsche-Möllmann GmbH &
Co. KG
Hansaring 6
D-4531 Lotte (DE)

(72) Erfinder : Onnenberg, Volker, Dipl.-Ing.
Schässburger Gasse 2
D-5267 Wiehl (DE)
Erfinder : Möllmann, Günter
Am Höhneberg 2
D-4506 Hagen (DE)

(74) Vertreter : Müller, Heinz-Gerd, Dipl.-Ing.
BAYER AG Konzernverwaltung RP
Patentabteilung
D-5090 Leverkusen 1, Bayerwerk (DE)

## Beschreibung

Die Erfindung betrifft eine Vorrichtung zum Herstellen von mit hinterschäumten Bezügen versehenen Polstern, insbesondere Automobilsitzpolstern, bestehend aus einem Formwerkzeug mit zugeordnetem Mischkopf, wobei über der unteren Formwerkzeughälfte eine Halterung plazierbar ist, an welcher mindestens ein Andrückelement (Niederhalter, Stößel) mit Andrückkante zum Andrücken des Bezugstoffabschnittes an die Wandung des Formhohlraumes angeordnet ist.

Derartige Stößel sind zum Beispiel aus DE-A-3319391 bekannt.

In der Regel verwendet man bei Vorrichtungen dieser Art ein sogenanntes Vakuumformwerkzeug, wobei der Bezugstoffabschnitt mittels Vakuum in das Formwerkzeug eingezogen wird. Gegebenenfalls wird dabei das Nachgleiten des Bezugstoffabschnittes durch einen den Bezugstoffabschnitt auf den den Formhohlraum umgebenden Rand drückenden Spannrahmen kontrolliert. Zusätzlich läßt sich auch noch ein sogenannter Oberstempel verwenden, welcher den Bezugstoffabschnitt in den Formhohlraum drückt, um ihn genauer der Kontur anzupassen (DE-OS 27 46 686).

Selbst bei der Kombination einiger oder aller dieser Hilfsmittel bereitet es Schwierigkeiten, den Bezugstoffabschnitt an kritischen Stellen, wie beispielsweise Stegen und Ecken, an die Wandung des Formhohlraumes völlig anzulegen. Da beim Hinterschäumen die obere Formwerkzeughälfte auf den überstehenden Rand des Bezugstoffabschnittes drückt, kann auch der entstehende Schäumdruck den Bezugstoff nicht mehr nachziehen und nicht völlig an die Wandung des Formhohlraums anlegen. Unvollständig geformte Polster lassen sich jedoch nicht verwerten. Man hat deshalb schon versucht, die Andrückkanten der Andrückelemente als Rollen auszubilden. Dies scheitert überall dort, wo die Wandung des Formhohlraumes konturiert ist, weil Rollen aus festem Material nicht nachgiebig sind und Rollen aus weicherem Material, wie Gummi oder Schaumstoff, durch das starke Walken kein Abrollen mehr gewährleisten.

Es besteht die Aufgabe, bei Vorrichtungen der eingangs genannten Art die Andrückkanten der Andrückelemente dahingehend zu verbessern, daß ein einwandfreies Anlegen des Bezugstoffabschnittes an die Wandung des Formhohlraumes auch an besonders kritischen Stellen, wie Stegen und Ecken, möglich ist.

Die Aufgabe wird dadurch gelöst, daß die Andrückkante aus mindestens einer Schraubenfeder besteht.

Dadurch wird erreicht, daß sich die Andrückkante beim Straffen des Bezugstoffabschnittes gleichzeitig den Konturierungen des Formhohlraumes anpassen kann. Insbesondere ist dabei von Vorteil, daß die Schraubenfeder sich bei der Schubbewegung erforderlichenfalls in sich um ihre Achse verdrehen kann. Gerade diese Eigenschaft gestattet es, den Bezugstoffabschnitt faltenfrei zu schieben und auf diese Weise an kritischen Stellen zum Anlegen zu bringen und sodann gegebenenfalls in geordnete, erforderliche Falten zu legen. Das Andrückelement läßt sich als Handgerät ausbilden ; es kann aber auch im Sinne einer Automatisierung mittels einer Halterung über der unteren Formwerkzeughälfte plazierbar sein. Bei einer Bewegung von Halterung und Formwerkzeughälfte zueinander erfüllt dann das Andrückelement seine Funktion. Offensichtlich wirkt sich für den Schub- und gleichzeitigen Streckeffekt die Wendel der Feder hinsichtlich der abrollenden Bewegung und die sich dabei verschiebenden Anpreßstellen durch den Federdraht positiv aus. Je nach der Kontur der kritischen Stellen sind besondere Ausführungsformen unterschiedlicher Art mehr oder weniger geeignet.

Gemäß einer ersten Ausführungsform ist die Schraubenfeder an ihren Enden eingespannt.

Bei dieser Ausführungsform verdreht sich die Schraubenfeder nur um sich selbst, so daß sie bei der Schubbewegung nur bis zu einem gewissen Grade abrollen kann und anschließend gleitet. Bei genügendem Anpreßdruck bleibt nach der Schubbewegung die durch das Verdrehen aufgebaute Federspannung bis zum Abheben des Andrückelementes erhalten.

Alternativ hierzu ist die Schraubenfeder drehbar gelagert.

Bei dieser Ausführungsform rollt die Schraubenfeder lediglich ab und übt nach dem Straffungsvorgang in Schubrichtung keine Spannung mehr aus. Es versteht sich, daß die Schraubenfeder erforderlichenfalls auch nur einseitig eingespannt ist.

Insbesondere für die Anpassung an Ecken des Formhohlraumes ist die Schraubenfeder auf einem als Formbügel ausgebildeten Kern angeordnet.

Dabei ist der Formbügel zweckmäßigerweise der jeweiligen Kontur der Ecke entsprechend gestaltet.

Bei derartigen Konturierungen des Formhohlraumes läßt sich vorzugsweise eine Schraubenfeder verwenden, welche über ihre Länge einen unterschiedlichen Außendurchmesser aufweist.

Dadurch können beispielsweise die Enden der Schraubenfeder einen Innendurchmesser besitzen, welcher dem Außendurchmesser eines gegebenenfalls vorhandenen Kerns oder Formbügels entspricht. Für die meisten Anwendungsfälle, insbesondere für Ecken, nimmt der Durchmesser der Schraubenfeder zu ihrer Mitte hin zu.

Es ist möglich, den von der Schraubenfeder umgebenen Innenraum mit einem Kern, z.B. einem Formbügel, voll auszufüllen oder dazwischen Luft zu lassen. Je nachdem, wo das Andrückelement angeordnet werden soll, ist die eine oder andere Variante vorteilhafter.

Beispielsweise bei Stegen auf dem Boden des Formhohlraumes wird man einen Niederhalter als Andrückelement verwenden. Hier ist es wegen der im wesentlichen ebenen Fläche entlang der Stege günstig, wenn die Schraubenfeder sich über ihre Länge nicht durchbiegen kann ; man wird also einen den Innenraum der Schraubenfeder nahezu völlig ausfüllenden Kern benutzen. Anders ist es bei Andrückelementen in Form von Stößeln. Sie dienen dem Andrücken des Bezugstoffabschnittes in Ecken. Dort ist es vorteilhaft, wenn die Schraubenfeder sich durch Nachgiebigkeit anpassen kann. Hierfür verwendet man entweder gar keinen Kern oder einen solchen, z.B. einen Formbügel, mit geringem Durchmesser. Gegebenenfalls kann der Formbügel über die Länge auch unterschiedlichen Durchmesser haben, um spezielle Abstützungseffekte zu erzielen. Schließlich ist es auch möglich, für den Kern bzw. Formbügel Material geeigneter Elastizität zu wählen.

Gemäß einer besonderen Ausführungsform sind mehrere Schraubenfedern auf gleicher Achse nebeneinander angeordnet.

Diese Ausführungsform ist insbesondere für Andrückelemente mit langen Andrückkanten geeignet. Die Aufteilung in mehrere aneinandergereihte, einzelne Schraubenfedern kann sich in bestimmten Anwendungsfällen günstig erweisen. Dabei kann es je nach Anwendungsfall vorteil-haft sein, daß die benachbarten Schraubenfedern gleichsinnige oder gegensinnige Windung besitzen.

Vorzugsweise weisen die Schraubenfedern unterschiedliche Steifigkeit auf.

Durch diese Maßnahme kann man stellenweise stärkere oder schwächere Effekte erzielen. Es versteht sich, daß bei einer Anordnung mehrerer Schraubenfedern diese zueinander gegebenenfalls unterschiedliche Durchmesser aufweisen.

In der Zeichnung ist die neue Vorrichtung auszugsweise und rein schematisch hinsichtlich eines als Niederhalter und eines als Eckenstößel ausgelegten Andrückelementes dargestellt. Es zeigen :

Fig. 1 einen Auszug aus der Vorrichtung mit einem Niederhalter im Schnitt,

Fig. 2 einen Auszug aus der Vorrichtung gemäß Fig. 1 in der Seitenansicht,

Fig. 3 einen Auszug aus der Vorrichtung mit einem Eckenstößel im Schnitt,

Fig. 4 einen Auszug aus der Vorrichtung gemäß Fig. 2 in der Draufsicht, jedoch ohne Spannrahmen und ohne Bezugstoffabschnitt, und

Fig. 5 eine spezielle Lagerung einer Schraubenfeder.

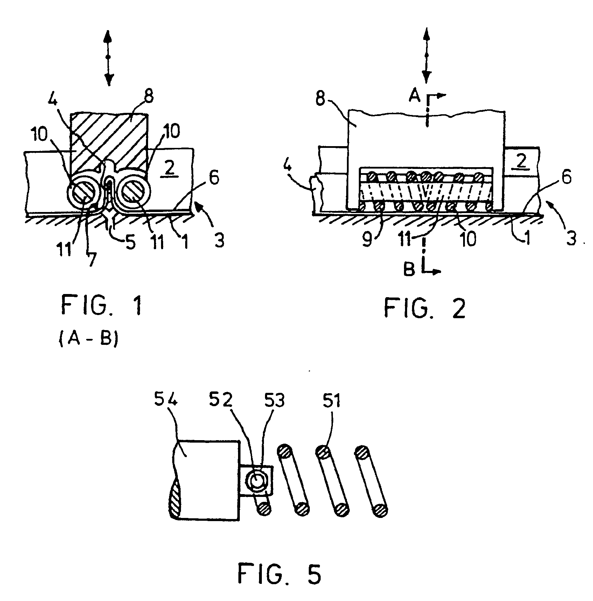

In Fig. 1, 2 weist die Wandung (Boden) 1 des Formhohlraumes 2 einer unteren Formwerkzeughälfte 3 einen Steg 4 auf. In der Wandung 1 sind Saugöffnungen 5 vorgesehen. Mittels des dort wirkenden Unterdruckes soll ein Bezugstoffabschnitt 6 an die Wandung 1 zum Anliegen gebracht werden. Wegen der kleinen Radien der Übergangsrundungen 7 zwischen Steg 4 und Wandung 1 reicht jedoch die Saugkraft für ein völliges Anlegen nicht aus. Deshalb verwendet man ein als Niederhalter 8 ausgebildetes Andrückelement, dessen Andrückkanten aus Schraubenfedern 9, 10 bestehen. Beim Gegeneinanderbewegen von Formwerkzeughälfte 3 und Niederhalter 8 wird der Bezugstoffabschnitt 6 in die Übergangsrundungen 7 gedrückt und nunmehr durch die Saugkraft festgehalten. Die Schraubenfedern 9, 10 sind gegensinnig gewickelt und ihr Innenraum ist durch einen als Achse dienenden Kern 11 ausgefüllt, auf welchem sie drehbar anliegen. Nach dem Andrücken des Bezugstoffabschnittes 6 läßt sich der Niederhalter 8 wieder entfernen.

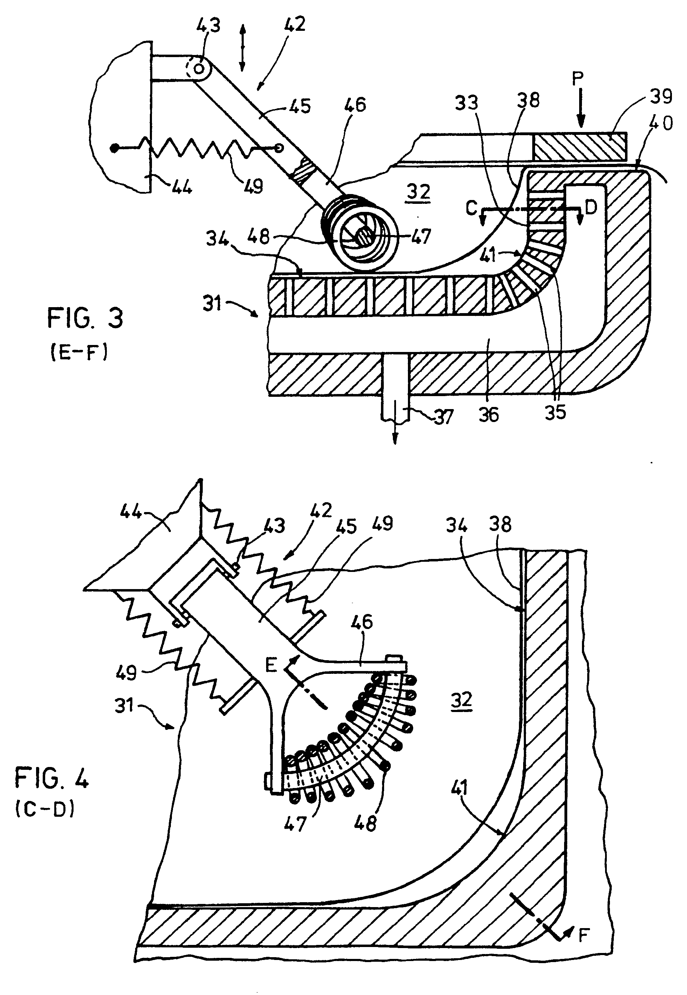

In Fig. 3, 4 ist die untere Formwerkzeughälfte 31 eines Formwerkzeuges dargestellt, dessen Formhohlraum 32 durch eine Saugöffnungen 33 aufweisende Wandung 34 begrenzt ist. Diese Saugöffnungen 33 sind über Kanäle 35 mit einem Vakuumkasten 36 verbunden, welcher über eine Leitung 37 an ein nicht dargestelltes Vakuumreservoir angeschlossen ist. In den Formhohlraum 32 ist ein Bezugstoffabschnitt 38 lose eingelegt, welcher mittels eines Spannrahmens 39 auf den den Formhohlraum 32 umgebenden Rand 40 mit einer solchen Kraft gedrückt wird, daß er noch in den Formhohlraum 32 nachgleiten kann.

In den Ecken 41 des Formhohlraumes 32 reicht die Saugkraft nicht aus, um den Bezugstoffabschnitt 38 zum Anliegen an die Wandung 34 zu bringen. Deshalb ist für jede Ecke 41 ein als Stößel 42 ausgebildetes Andrückelement vorgesehen. Es ist nur ein Stößel 42 dargestellt. Deshalb ist nachfolgend Aufbau und Wirkungsweise für nur einen von vier benötigten, gleichartigen Stößeln 42 beschrieben. Dieser Stößel 42 ist mittels einer Schwenkachse 43 an einer angedeuteten, handhabbaren Halterung 44 gelagert. Er besteht aus einem gabelartigen Arm 45, in dessen Gabel 46 ein elastischer Formbügel 47 angeordnet ist, welcher in etwa der Krümmung der Ecke 41 angepaßt ist. Dieser Formbügel 47 dient einer Schraubenfeder 48 als Kern. Der Außen- sowie der Innendurchmesser der Schraubenfeder 48 sind an den Enden am geringsten. Der Innendurchmesser ist wesentlich größer als der Durchmesser des Formbügels 47. Die Schraubenfeder 48 ist drehbar gelagert, wird aber von der Gabel 46 leicht zusammengedrückt. Beim Herabbewegen der Halterung 44 trifft der Stößel 42 auf die Wandung (Boden) 34 auf und schwenkt durch den Druck in Richtung der Ecke 41. Der Arm 45 ist mittels einer Zugfeder 49 an der Halterung 44 befestigt und übt dadurch Druck auf die Wandung 34 bzw. den Bezugstoffabschnitt 38 aus. Da die Schraubenfeder 48 relativ weich ist und genügend Spiel um den Formbügel 47 hat, kann sie sich bei der Bewegung sehr gut der Kontur der Wandung 34 anpassen und dabei den Bezugstoffabschnitt 38 straffen und in die Ecke 41 schieben. Die Schraubenfeder 48 fördert auch die erforderliche Bildung von gleichmäßigen Falten bei nich dehnbaren Bezugstoffen in der Ecke 41 im senkrechten Bereich der Wandung 34.

In Fig. 5 ist eine Schraubenfeder 51 mit ihrem Ende 52 in einem Loch 53 einer angedeuteten Gabel 54 eines nicht dargestellten Stößels eingespannt.

## Ansprüche

1. Vorrichtung zum Herstellen von mit hinterschäumten Bezügen versehenen Polstern, insbesondere Automobilsitzpolstern, bestehend aus einem Formwerkzeug mit zugeordnetem Mischkopf, wobei über der unteren Formwerkzeughälfte (31) eine Halterung (44) plazierbar ist, an welcher mindestens ein Andrückelement (Niederhalter, Stößel) (8, 42) mit Andrückkante (48) zum Andrücken des Bezugstoffabschnittes (6, 38) an die Wandung (1, 34) des Formhohlraumes (2, 32) angeordnet ist, dadurch gekennzeichnet, daß die Andrückkante aus mindestens einer Schraubenfeder (9, 10, 48, 51) besteht.

2. Vorrichtung nach Anspruch 1, dadurch gekennzeichnet, daß die Schraubenfeder (51) an ihren Enden (52) eingespannt ist.

3. Vorrichtung nach Anspruch 1, dadurch gekennzeichnet, daß die Schraubenfeder (9, 10, 48) drehbar gelagert ist.

4. Vorrichtung nach einem der Ansprüche 1 bis 3, dadurch gekennzeichnet, daß die Schraubenfeder (48) auf einem als Formbügel (47) ausgebildeten Kern angeordnet ist.

5. Vorrichtung nach einem der Ansprüche 1 bis 4, dadurch gekennzeichnet, daß die Schraubenfeder (48) über ihre Länge unterschiedlichen Außendurchmesser aufweist.

6. Vorrichtung nach einem der Ansprüche 1 bis 5, dadurch gekennzeichnet, daß mehrere Schraubenfedern (9, 10) auf gleicher Achse nebeneinander angeordnet sind.

7. Vorrichtung nach Anspruch 6, dadurch gekennzeichnet, daß die Schraubenfedern (9, 10) unterschiedlicht Steifigkeit aufweisen.

## Claims

1. An apparatus for the production of cushions provided with back-foamed coverings, more particularly automobile seat cushions, consisting of a mould with an associated mixing head, a holder (44) - on which at least one pressing element (clamping mechanism, ram) (8,42) with a pressing edge (48) for pressing the piece of fabric (6,38) onto the wall (1,34) of the mould cavity (2,32) is arranged - being designed to be placed over the lower half (31) of the mould, characterized in that the pressing edge consists of at least one helical spring (9,10,48,51).

2. An apparatus as claimed in claim 1, characterized in that the helical spring (51) is anchored at its ends (52).

3. An apparatus as claimed in claim 1, characterized in that the helical spring (9,10,48) is mounted for rotation.

4. An apparatus as claimed in any of claims 1 to 3, characterized in that the helical spring (48) is arranged on a core in the form of a mould bracket (47).

5. An apparatus as claimed in any of claims 1 to 4, characterized in that the helical spring (48) has different external diameters over its length.

6. An apparatus as claimed in any of claims 1 to 5, characterized in that several helical springs (9,10) are arranged adjacent one another on the same axis.

7. An apparatus as claimed in claim 6, characterized in that the helical springs (9,10) differ in their stiffness.

## Revendications

1. Dispositif de fabrication de coussins à revêtement garni par de la mousse sur le revers, en particulier coussins de sièges d'automobiles, se composant d'un outil de mise en forme à tête mixte associée, un support (44) pouvant être placé sur la moitié inférieure de l'outil de mise en forme (31), auquel est assemblé au moins un élément de pression (serre-flan, poussoir) (8, 42) pourvu d'une arête de pression (48) pour presser la portion de matière de revêtement (6, 38) contre la paroi (1,34) du creux de mise en forme (2, 32), caractérisé en ce que l'arête de pression se compose d'au moins un ressort à boudin (9, 10, 48, 51).

2. Dispositif selon la revendication 1, caractérisé en ce que le ressort à boudin (51) est fixé au niveau de ses extrémités (52).

3. Dispositif selon la revendication 1, caractérisé en ce que le ressort à boudin (9, 10, 48) est monté avec faculté de rotation.

4. Dispositif selon l'une des revendications 1 à 3, caractérisé en ce que le ressort à boudin (48) est placé sur un corps central conformé en traverse de mise en forme (47).

5. Dispositif selon l'une des revendications 1 à 4, caractérisé en ce que le ressort à boudin (48) présente des diamètres exterieurs différents sur sa longueur.

6. Dispositif selon l'une des revendications 1 à 5, caracterisé en ce que plusieurs ressorts à boudin (9, 10) sont disposés sur le même axe, les uns à côté des autres.

7. Dispositif selon la revendication 6, caractérisé en ce que les ressorts à boudin (9, 10) présentent des

rigidités différentes.

FIG. 1
(A - B)

FIG. 2

FIG. 5

FIG. 3
(E-F)

FIG. 4
(C-D)